# EUROPÄISCHE PATENTSCHRIFT

(11) **EP 0 776 356 B1**
(45) Veröffentlichungstag und Bekanntmachung des Hinweises auf die Patenterteilung: **30.06.1999**
(21) Anmeldenummer: 95928419.1
(22) Anmeldetag: 12.08.1995
(51) Int. Cl.: C11B 1/10, C11C 3/10

(54) **VERFAHREN ZUR GEWINNUNG VON NICHT WASSERLÖSLICHEN, NATIVEN PRODUKTEN AUS NATIVEN STOFFGEMENGEN MIT HILFE DER ZENTRIFUGALKRAFT**
PROCESS FOR EXTRACTING NATIVE PRODUCTS WHICH ARE NOT WATER-SOLUBLE FROM NATIVE SUBSTANCE MIXTURES BY MEANS OF CENTRIFUGAL FORCE
PROCEDE D'EXTRACTION DE PRODUITS NATIFS INSOLUBLES DANS L'EAU A PARTIR DE MELANGES DE MATIERES NATIVES AU MOYEN DE LA FORCE CENTRIFUGE

(30) Priorität: 16.08.1994 DE 4428924
(43) Veröffentlichungstag der Anmeldung: 04.06.1997
(73) Patentinhaber: Dr. Frische GmbH, D-63755 Alzenau (DE)
(72) Erfinder: BEST, Bernd, D-64546 Mörfelden-Walldorf (DE); BRUNNER, Karlheinz, D-59302 Oelde-Stromberg (DE); HEGWEIN, Katja, D-64354 Reinheim (DE); RICKER, Rainer, D-63128 Dietzenbach (DE); FRISCHE, Rainer, D-60529 Frankfurt am Main (DE)
(74) Vertreter: Lippert, Marianne
(86) Internationale Anmeldenummer: DE9501065
(87) Internationale Veröffentlichungsnummer: WO9605278

(56) Entgegenhaltungen:
- EP-A- 0 557 758
- WO-A-93/25644
- WO-A-95/22590
- DE-A- 2 056 896
- FR-A- 2 400 552
- US-A- 4 211 695
- DATABASE WPI Week 9110 Derwent Publications Ltd., London, GB; AN 91-070562 & JP,A,03 020 397 (TAKAO M) , 29.Oktober 1991
- CHEMICAL ABSTRACTS, vol. 120, no. 6, 7.Februar 1994 Columbus, Ohio, US; abstract no. 57141x, HU, SHAOHAI ET AL. 'Process of extracting tea oil and saponin from tea-oil seed and tea seed dregs' Seite 163; Spalte 1; & CN,A,1 068 360 27.Januar 1993
- JOURNAL OF THE AMERICAN OIL CHEMISTS' SOCIETY, Bd. 61, Nr. 9, 1984 CHAMPAIGN US, Seiten 1457-1460, R.J. HRON, SR. ET AL. 'An aqueous ethanol extraction process for cottonseed oil'

## Beschreibung

Die Erfindung betrifft ein Verfahren zur Gewinnung von biogen gebildeten oder nativen, organischen Stoffen aus biogenen oder nativen Stoffgemengen, bei dem das Ausgangs- material fein zerkleinert und zu einem wäßrigen Brei verarbeitet wird und anschließend im Zentrifugalfeld in eine wäßrige, feste Bestandteile enthaltende Phase und eine flüssige, organische Phase getrennt wird. Sie betrifft insbesondere die Gewinnung von Fetten, Ölen und Wachsen aus Ölfrüchten und pflanzlichem und tierischem Gewebe.

Öle, Fette und Wachse müssen zu ihrer Gewinnung von den übrigen Bestandteilen, mit denen sie zum Teil innigst vermischt sind, oder in denen sie fein verteilt sind, getrennt werden.

Ein derartiges Verfahren zur Gewinnung von Ölen und Fetten aus nativen Produkten, z.B. Ölfrüchten, mit Hilfe der Zentrifugalkraft ist bereits bekannt. In diesem Verfahren werden die Ausgangsprodukte zerkleinert und zu einem wäßrigen Brei verarbeitet. In der Praxis angewendet wird dieses Verfahren bei der Gewinnung von Ölivenöl. In der Erprobung ist ein analoges Verfahren für Öltrockenfrüchte, wobei bei trockenem Ausgangsgut Wasser zugegeben wird. Gewonnen wird hierbei in der Zentrifuge eine Sahne und anschließend wird diese Sahne in einer Zentrifuge in Öl- und Nichtölbestandteile getrennt.

Bei diesen Gewinnungsmethoden verbleibt ein Restanteil der nicht wasserlöslichen, flüssigen Öle und Fette in der als wäßriger Brei abgetrennten Festphase. Dies gilt insbesondere für Öltrockenfrüchte. Dieser Restanteil wird nach dem Stand der Technik mit geeigneten, nicht wasserlöslichen Lösemitteln, vorzugsweise mit Hexan, wiederum mittels Zentrifugalkraft extrahiert und abgetrennt. Das auf diese Weise gewonnene Restöl enthält jedoch einen erheblich höheren Anteil an insbesondere Lösemittel löslichen Bestandteilen.

Der Prozeß, Öle durch Zentrifugieren zu gewinnen, wird häufig dadurch erschwert, daß die abzutrennende, nicht wasserlösliche Flüssigkeit schwer zerstörbare Emulsionen und Komplexe mit anderen Bestandteilen des Ausgangsmaterials bildet. Hierdurch wird die Ausbeute verringert. Um die Abtrennung im Zentrifugal feld zu erleichtern, wird deshalb der Brei einer längeren Vorbehandlung unterzogen, indem er bei erhöhter Temperatur malaxiert wird. Dennoch verbleiben nach der Trennung Restmengen des Öls an Feststoffen des abgetrennten Breis adsorbiert bzw. in dem Brei komplex gebunden.

Dieser Malaxierprozeß kann mehrere Stunden dauern und ist mit Erfolg nur bei der Ölfrucht Olive anwendbar. Öle (Fette, Wachse), die hingegen innig verbunden mut Feststoffen im Rohstoff vorliegen, können nicht durch einen Malaxierprozeß mit der gewünschten Effizienz aufgespalten werden.

Auf Öltrockenfrüchte kann dieser Prozeß ferner nur bedingt übertragen werden. Zwar kann man aus den Trockenfrüchten ein Mehl herstellen und mit entsprechendem Zusatz von Wasser auch zu einem entsprechenden Brei gelangen, dieser läßt sich jedoch -selbst nach mehrstündigem Malaxieren- wenn überhaupt im Zentrifugal feld nur in eine leichtere Ölemulsionsphase (Sahne) und eine Feststoffe enthaltende schwerere Phase, die noch erhebliche Ölmengen gebunden enthält, überführen.

Aus der DE-OS 20 56 896 sind
- die Gewinnung einer derartigen ölhaltigen Emulsion, der sogenannten Sahne, unter Zugabe eines Elektrolyten durch Nutzung der Zentrifugalkraft in einem ersten Schritt und
- die Spaltung der Emulsion in einem zweiten Schritt beispielsweise mit Alkohol oder mechanisch zu blankem Öl und Wasserphase mit Resten von Feststoffen beschrieben. Durch die Zugabe des Elektrolyten wird in bekannter Weise die Mischung aufgebrochen und die Dichte der wäßrigen Phase so erhöht, daß die nachfolgende Trennung in eine ölhaltige und eine wasserhaltige Phase erleichtert ist.

Im Stand der Technik wird demnach zur Gewinnung der blanken Ölphase stets ein mehrstufiger Prozeß angewandt, der im ersten Schritt entweder einen langwierigen, zudem nur bedingt erfolgreichen Malaxierprozeß oder die Elektrolytzugabe mit Zentrifugieren vor dem zweiten Schritt der eigentlichen Ölabtrennung beinhaltet.

Ferner ist ein Verfahren bekannt, in dem Pflanzenöle und Fette aus Ölfrüchten mit erhöhtem Öl-/Fettgehalt durch mechanisches Abpressen gewonnen werden. Die Preßkuchen enthalten dabei stets Restöl-/-fettgehalte, die kaum unter 7%, bezogen auf die Trockensubstanz der Preßkuchen, liegen. Diese Restmengen werden mit Lösemitteln, -vorzugsweise Hexan-, extraktiv gewonnen. Das Lösemittel wird anschließend destillativ zurückgewonnen.

Dieses Verfahren verlangt Investitionen in Preß- und Extraktionsanlagen. Die gewonnenen Produkte enthalten außerdem Verunreinigungen, wie Schwebstoffe, Schleimstoffe, Farbstoffe usw., die aufwendig entfernt werden müssen.

Die Gewinnung nativer Öle, Fette und Wachse wird dadurch erschwert, daß zum einen zwischen Öl, Fett und Wachs und dem sie einbettenden Gewebe Attraktionskräfte wirken, und daß zum anderen bei der Gewinnung mit dem Öl, Fett und Wachs auch Nicht-Öl-Bestandteile gelöst und/oder als Schwebeteilchen abgetrennt werden. Die bekannten Verfahren erfordern daher eine zusätzliche, nachträgliche Reinigung der gewonnenen Öle, Fette und Wachse.

Demgemäß ist es Aufgabe der Erfindung, ein einfacheres, wirksames Verfahren zur Gewinnung von nicht wasserlöslichen, nativen Produkten aus den genannten Stoffgemengen zu schaffen. Wie weiter unten dargelegt, beinhalten diese nicht wasserlöslichen, nativen Produkte nicht nur Öle, Fette und Wachse, sondern auch deren Derivate, zum Beispiel Umesterungsprodukte und freie Fettsäuren.

Unter Derivate werden in diesem Zusammenhang alle im Gewinnungsverfahren nicht wasserlöslichen, flüssigen Folgeprodukte verstanden, einschließlich der Derivate, die erst bei höheren Temperaturen im flüssigen Zustand vorliegen, wie zum Beispiel Kakaobutter.

Diese Aufgabe wird durch den Gegenstand des Anspruchs 1 gelöst, wonach in einem einzigen Schritt aus dem wäßrigen Brei eine blanke Ölphase, eine Wasserphase und eine von Öl befreite Feststoffphase im Zentrifugal feld gebildet und getrennt werden können.

Durch den Zusatz wasserlöslicher, organischer Lösemittel wird die Zeit für die Vorbereitung des Breis gegenüber herkömmlichen Verfahren mit langen Malaxierzeiten erheblich verkürzt. Die wasserlöslichen organischen Lösemittel sind vorzugsweise Alkohole, insbesondere Kurzkettige Alkohole, da sie gut wasserlöslich sind, wobei Anteile von 5 Gew.% bis 75 Gew.% des gesamten Flüssiganteils grundsätzlich möglich sind, jedoch vorzugsweise mit Anteilen von etwa 15 Gew.% bis etwa maximal 50 Gew.% gearbeitet wird, wie im Unteranspruch 8 definiert ist. Auf die Grenze kann durch wasserlösliche Salze und wasserlösliche Lösungsmittelgemische wie z.B. Ethanol/Eisessig Einfluß genommen werden, wie weiter unten erläutert.

In Database WPI, week 9110, Dervent Publ. Ltd, AN 91-070562 wird zwar auch ein wasserlösliches Lösemittel (Isopropanol oder n-Propanol) eingesetzt und als Alternative zu einer Filtration zentrifugiert, jedoch unterscheiden sich sowohl der Zweck der Zugabe dieses Lösemittels als auch die damit erzielte Wirkung von denjenigen des erfindungsgemäß eingesetzten Lösemittels.

In dieser Veröffentlichung wird zur Gewinnung von Fischöl der frische Fisch zerkleinert und mit den genannten Lösemitteln extrahiert. Das heißt, daß soviel des Lösemittels zugegeben wird, daß der gewünschte Stoff selektiv aus dem Stoffgemisch herausgelöst werden kann. Öl und Lipide liegen dann zusammen in echt gelöster Form ungetrennt in einer gegenüber den Feststoffen leichten Phase vor, die natürlich auch das herauslösende Lösemittel Isopropanol bzw. n-Propanol enthält. Diese leichte flüssige Phase Öl + Lipide + Isopropanol bzw. n-Propanol kann dann entweder durch Filtration oder durch eine lediglich die feste Phase von der flüssigen Phase trennende "Klär"Zentrifuge abgetrennt werden. Eine separate wäßrige Phase bildet sich hierbei nicht.

Im Widerspruch zur Erfindung nach Anspruch 1 enthält dann nach dieser Veröffentlichung die abgetrennte schwerere (Feststoff) Phase praktisch nicht das dort extrahierende und lösend wirkende Isopropanol, das sich aufgrund dieser Extraktion im herausgelösten Fett in der leichteren flüssigen Phase befindet. Daher muß nach dieser Veröffentlichung das Propanol anschließend in einem weiteren Arbeitsschritt herausdestilliert und vom Fett getrennt werden. Dasselbe gilt für das Wasser, das sich ebenfalls in der einzigen flüssigen Phase befindet.

Insgesamt gibt diese Veröffentlichung die klassische Fest-Flüssig-Extraktion zur Gewinnung von Ölen aus Ölfrüchten angewandt auf Fischölgewinnung wieder, wobei stets das mit dem Wertstoff beladene Lösemittel (die Extraktionsphase) durch Destillation in den Wertstoff und das Lösemittel zerlegt wird.

Chemical Abstracts vol. 120 (6) 7.2.1994, 57141x lehrt wie die oben abgehandelte Veröffentlichung die Extraktion, d.h. das Herauslösen hier von Teeöl mit Alkohol. Auch hier wird das Öl daher im Gegensatz zur Erfindung aus der mit Öl beladenen leichten Alkoholphase durch Rückgewinnung des Alkohols aus dieser Phase gewonnen.

Im Gegensatz zur Erfindung wird in dieser Veröffentlichung ein zwei-stufiges Zentrifugenverfahren angewandt, bei dem zunächst in einer ersten Zentrifuge die Feststoffe abgetrennt werden und dann in einer Drei-Phasen-Schneckenzentrifuge bzw. einem Dekanter Teeöl, Saponin und Rückstände getrennt werden.

Das Wesen der Erfindung besteht demgegenüber in einem einzigen Zentrifugenschritt, bei dem der Alkohol gleichzeitig mit den Feststoffen in einer schwereren wässrigen Phase getrennt von Öl bzw. Fett verbleibt und die leichte klare so gut wie alkoholfreie Fettphase mit klarer Trennlinie darüber schwimmt.

Bei Zusatz einer sehr geringen Menge an wasserfreiem organischem Lösemittel, wie z.B. Alkohol, zu dem fein gemahlenen Ausgangsmaterial wird zwar zunächst kein positiver Effekt auf die Trennung beobachtet. Ab einer bestimmten Konzentration an wasserfreiem organischen Lösemittel tritt hingegen überraschenderweise eine Trennung in blankes Öl und Reststoffe ein. Da das Ausgangsmaterial je nach eingesetzter Ölsaat und/oder tierischen Materials, wie z.B. Fisch, Innereien von Fisch und anderen Schlachttieren, in seiner von Natur aus vorgegebenen Weise unterschiedliche Gehalte an Wasser, Salzen, Proteinen und Schleimstoffen besitzt, muß für jedes Material die optimale Zusatzmenge an wasserfreiem or anischen Lösemittel bestimmt werden. In der Regel liegt diese bestimmte Konzentration zwischen 15 und 20 Gew.% des wasserfreien organischen Lösemittels. Durch weiteren Zusatz an wasserfreiem organischen Lösemittel erfolgt eine Annäherung an das optimale Verhältnis zwischen wäßriger und nicht wäßriger Phase. Höhere Mengen an Zusatz von Lösemittel wirken sich jedoch negativ aus. Schon bevor die Dichte der wäßrigen Phase gleich der Dichte der nicht wäßrigen Phase bzw. Ölphase ist, treten Verluste in der Ausbeute an blankem Öl ein. Daher sollte die Menge des Zusatzes an wasserfreiem organischen Lösemittel so gewählt werden, daß sie in der wäßrigen Phase und den darin enthaltenen gelösten Bestandteilen vorzugsweise maximal 50 Gew.% beträgt, wie für Öltrockenfrüchte auch im Anspruch 9 zum Ausdruck kommt.

Grundsätzlich wird gerade soviel an wasserfreiem organischen Lösemittel zugefügt, daß eine blanke, emulsionsfreie Ölphase entsteht. Für eine gute Trennung in Öl und Nichtöl-Bestandteile muß die Ölphase stets leichter als die wäßrige Phase sein. Liegt diese Voraussetzung nicht oder nur unzureichend vor, kann in bekannter Weise zusätzlich durch Zusatz von wasserunlöslichen, leichten Lösungsmittels, wie zum Beispiel Hexan, und/oder durch Zusatz ölunlöslicher, aber wasserlöslicher Elektrolyte, wie zum Beispiel Säuren und Salzen, die Dichte in geeigneter Weise verschoben werden. Die Art und Menge des Zusatzes an wasserfreiem organischen Lösemittel ist je nach Material (Ölsaat oder tierisches Material) spezifisch. Es ist jedoch möglich, durch wenige Versuche das für jedes Material existierende Optimum und damit die Obergrenze des Zusatzes zu ermitteln.

Überraschenderweise zeigte sich, daß durch Zugabe des wasserlöslichen, organischen Lösemittels das Emulsions- und Komplexbildungsvermögen der Stoffsysteme zerstört wird. Die wäßrige und die organische Phase bilden eine "blanke" Phasengrenze aus, zwischen der organischen und der wäßrigen Phase entsteht eine scharfe Grenze.

In einer Zentrifuge, z.B. einer Becherzentrifuge, sind nach der wäßrigen Phase eine "blanke" Phasengrenze und eine klare organische Phase zu erkennen. Dies erleichtert die Trennung der beiden Phasen erheblich. Ohne den Zusatz eines wasserlöslichen Lösungsmittels dagegen bildet sich zwischen den beiden Phasen eine Emulsionsschicht, womit eine saubere Trennung beider Phasen nicht möglich ist.

Durch die saubere Trennung steigt die Ausbeute an abzutrennender, organischer Phase erheblich. Die Restmengen der organischen Phase im wäßrigen Austragsbrei sind unbedeutend. Auch die gewonnenen, organischen Flüssigkeiten enthalten erheblich weniger "fettlösliche" Verunreinigungen. Die zugesetzten Lösemittel verbleiben zum weit überwiegenden Teil im abgetrennten Brei und können aus diesem destillativ entfernt werden.

Die Trennung erfolgt in einer allgemein bekannten Zentrifuge. Bevor der Brei in das Zentifugalfeld gebracht wird, wird er gegebenenfalls eine Weile bei erhöhter Temperatur gehalten, so daß sich ein Verteilungsgleichgewicht einstellt.

Aus dem Stand der Technik (z.B. DE-OS 20 56 896) war lediglich bekannt, daß z.B. die sogenannte Sahne in vertretbarer Ausbeute u.a. durch Alkoholeinwirkung aufgebrochen werden kann. Die Gewinnung der Sahne setzte jedoch den Einsatz eines Elektrolyten im Zentrifugalfeld voraus. Nach dem Stand der Technik ist es für den Fachmann unsinnig, den Elektrolyten ganz oder teilweise durch Alkohol zu ersetzen, da der Alkohol die Dichte der wäßrigen Phase verringern würde und damit genau den gegenteiligen Effekt des Elektrolyten bewirken würde. Umso erstaunlicher ist die oben dargelegte Wirkung, daß durch den erfindungsgemäßen Zusatz die zwangsweise eintretende Verringerung der Unterschiede der Dichten zwischen wässriger Phase und Ölphase keine negativen Auswirkungen auf die Abtrennbarkeit der Ölphase hat, vielmehr bewirkt der Zusatz das Entstehen einer blanken Öl- bzw. Wachsphase.

Ist es schon erstaunlich, daß mit Zusatz organischer Lösemittel eine sehr gute Trennung erfolgen kann, so läßt sich die Trennung bei trockenem Ausgangsmaterial gemäß Anspruch 3 weiter verbessern, wenn das feinzerteilte Ausgangsmaterial zunächst mit dem wasserfreien organischen Lösemittel allein, evtl. bei erhöhter Temperatur, malaxiert, und anschließend die entsprechende Wassermenge zugesetzt wird. Besonders vorteilhaft wirkt sich diese Variante der nachträglichen Wasserzugabe insbesondere bei solchen Öl- und Wachstrockenfrüchten aus, deren Wasserphase Schleimstoffe aufnehmen würde. Ein Beispiel für eine derartige Ölfrucht ist insbesondere Leinsamen. Schleimstoffe treten jedoch auch z.B. bei Raps und Sonnenblumenkernen auf.

Bei Öltrockenfrüchten wird vorzugsweise entsprechend der Angaben im Anspruch 9 gearbeitet.

Unter trockenem Ausgangsmaterial wird z.B. zerkleinerte lagerfähige Fruchtmasse mit einem so geringen Feuchtigkeitsgehalt (in der Regel nicht mehr als etwa 7% bis 10%) verstanden, daß keine Keimbildung auftritt.

Das erfindungsgemäße Verfahren eignet sich für die Gewinnung von Ölen aus Ölfrüchten oder Wachsen aus wachshaltigen Pflanzenteilen. Die Anwendungsgebiete beschränken sich jedoch nicht nur auf diese Stoffe, sondern das Verfahren kann grundsätzlich auf alle Stoffgemenge, die flüssige, organische Stoffe enthalten, angewendet werden, insbesondere pflanzliche und tierische Gewebe, wie vor allem Fisch.

Der Fachmann weiß, daß im Gegensatz zu reinem Hering bei der Gewinnung von Fischöl z.B. ein Anteil von mehr als 25% an Rotbarsch in der Rohware zu Emulsionsproblemen führt, die eine hinreichende Abtrennung des Öls und eine Gewinnung von hochwertigem Fischmehl unmöglich machen. Durch Malaxieren allein kann dieses Problem nicht gelöst werden. Aus diesem Grund wird in der Praxis stets Rotbarschabfall mit entsprechenden Mengen von Abfall anderer Fische, z.B. Hering bei der Ölgewinnung vermengt. Dieser Fall zeigt, daß selbst bei scheinbar gleichartigen Rohstoff (Fisch) die Gewinnung von Öl wegen der Unterschiede im chemischen Charakter der Fischarten sowohl der Öle als auch der Nichtölbestandteile im Fisch gravierende Unterschiede aufweisen können.

Im Unterschied zum bisherigen Fischöl-Gewinnungsverfahren gestattet das erfindungsgemäße Verfahren jedoch selbst aus Rotbarsch-Abfällen ohne jeden Zusatz von anderem Fisch, das in ihnen enthaltende Öl und Fett in eine blanke Ölphase und eine wäßrige Phase, in der Nicht-Ölbestandteile des Rotbarschabfalls hauptsächlich als Feststoff suspendiert enthalten sind, aufzutrennen und so zum einen reines Rotbarschöl, zum anderen äußerst fettarmes Fischmehl zu gewinnen.

Bei dem erfindungsgemäßen Verfahren werden die nativen Produkte zudem reiner als bisher gewonnen, so daß ein zusätzlicher Reinigungsschritt für viele Anwendungen, z.B. technische Anwendungen, nicht erforderlich ist.

Für etliche Anwendungen wird jedoch von freien Fettsäuren befreites Öl bzw. Fett benötigt. Hier bietet die Erfindung einen entscheidenden Vorteil, denn es stellte sich heraus, daß durch Neutralisation unter Zugabe von Basen vor dem Zentrifugieren ein von freien Fettsäuren befreites Öl direkt abgetrennt werden kann. Dies widerspricht der üblichen Vorgehensweise, den pH-Wert des zu zentrifugierenden Breis im nicht basischen Bereich einzustellen, um schwer trennbare Seife/Ölemulsionen zu vermeiden.

Bei der erfindungsgemäßen Insitu-Entsäuerung (Anspruch 10) wird vor dem Zentrifugieren z.B. dem Ölsaatbrei oder dem Ölsaatmehl ein, auf den Anteil von freien Fettsäuren im Öl der Ölsaat berechneter Zusatz von säurebindenden Stoffen zugesetzt. Derartige säurebindenden Stoffe sind z.B. Calciumoxid, Magnesiumoxid, Natriumhydroxid, Kaliumhydroxid, Kaliumcarbonat, Natriumcarbonat sowie Natrium- und Kaliumsalze schwacher Säuren, insbesondere nativer Fettsäuren. Die säurebindenden Materialien können entweder in fester oder in flüssiger Form, etwa durch vorheriges Lösen in der für den Gewinnungsprozeß benötigten Wassermenge, erfolgen. Auch kann der Zusatz der Säurebinder bereits beim Vermahlen zugesetzt werden.

Art und Menge des jeweiligen säurebindenden Materials hängt entscheidend von der Art und der Qualität des zu entölenden Rohstoffes ab. Darüber hinaus werden Art und Menge des Zusatzes von dem zu erreichenden Ziel bestimmt. So wird z.B. für ein zu gewinnendes Öl, das lediglich eine Säurezahl um 1 aufweisen soll, wesentlich weniger Zusatz benötigt, als für ein Öl, das eine Säurezahl kleiner 0,1 aufweisen soll.

Grundsätzlich wird, wie im Anspruch 12 definiert, mehr zugesetzt als aus der Säurezahl berechnet wird, vorzugsweise bis zum etwa Dreifachen des berechneten Werts. Dabei reicht aus, wenn der pH-Wert des wäßrigen Austrags nach der Trennung zwischen etwa 8,5 und 9,5 liegt, anders als bei der klassischen Entsäuerung von rohen Ölen, bei der der pH-Wert des wäßrigen Austrags um 10 liegt.

Mit diesem Zusatz kann auf die Grenzen für die Zentrifugentrennung nach Anspruch 9 Einfluß genommen werden.

Überraschenderweise hat sich bei der Vorgehensweise der Insitu-Entsäuerung des Öls herausgestellt, daß auch weitere Ölinhaltsstoffe bzw. Ölbegleitstoffe, die sowohl beim Press- und Extraktionsverfahren, wie auch bei der Ölgewinnung im normalen Zentrifugalverfahren in den gewonnenen Ölen verbleiben, entfernt werden können. So kann bei der erfindungsgemäßen Vorgehensweise z.B. der Gehalt an im Öl gelöstem Phosphat bereits während der Ölgewinnung auf Werte gesenkt werden, wie sie üblicherweise erst hochraffinierte Pflanzenöle aufweisen. Ähnliches gilt für im Öl gelöste Farbstoffe, z.B. Chlorophyll.

Bei der erfindungsgemäßen Insitu-Entsäuerung sollte erwartet werden, daß die Ausbeute an Neutralöl gegenüber einem mit Hilfe des Zentrifugalfeldes gewonnenen, jedoch nicht Insitu-entsäuerten Öls, um den Anteil, der den entfernten freien Fettsäuren entspricht, niedriger liegt. Dies ist jedoch überraschenderweise nicht der Fall. Wird z.B. eine Ölsaat eingesetzt, deren Öl einen Gehalt an freien Fettsäuren von 4 Gew.% bezogen auf das in ihr enthaltene Öl aufweist, ohne Insitu-Entsäuerung im Zentrifugalfeld gewonnen, so treten geringe Ausbeuteverluste dadurch auf, daß die abgetrennten Nicht-Ölbestandteile Restölmengen enthalten. Diese können in diesem Beispiel 5 bis 10 Gew.% der Trockenmasse der Nicht-Ölbestandteile ausmachen. Erfolgt dagegen die Gewinnung des Öls im Zentrifugal feld unter Zusatz von Säurebindern (Insitu-Entsäuerung), so werden so lange gleichartige Ausbeutemengen erzielt, bis der Gehalt an freien Fettsäuren (und damit die, für die Insitu-Entsäuerung benötigte, Basenmenge) höher ist, als die mit den Nicht-Ölbestandteilen als Verluste abgetrennten Ölmengen. Offensichtlich verdrängen die, bei der Insitu-Entsäuerung entstehenden Fettsäureseifen neutrales Öl aus den Nicht-Ölbestandteilen und werden anstelle der Neutral-Öle mit den Nicht-Ölbestandteilen im Verfahren ausgetragen.

Ein entscheidender Vorteil des Insitu-Entsäuerungsverfahrens gegenüber dem Stand der Technik, bei dem eine Entsäuerung der Ölgewinnung nachgeschaltet ist, liegt damit darin, daß die Insitu-Entsäuerung eine Erhöhung der gewinnbaren Menge an Neutralöl bewirkt. Beim herkömmlichen Verfahren zur Entsäuerung treten dagegen mit dem Abtrennen der freien Fettsäuren als Seifen Zwangsverluste durch Mitreißen von Neutralöl auf.

Dieser Effekt kann dadurch gezielt genutzt werden, daß zu einem Rohstoff, dessen Gehalt an freien Fettsäuren niedriger liegt, als der bei der Gewinnung des Öls im Zentrifugalfeld eintretende Ölverlust, vor der Ölgewinnung freie Fettsäuren bzw. Natrium- oder Kaliumsalze freier Fettsäuren zugesetzt werden. Diese verdrängen dann aus den Nicht-Ölbestandteilen die Neutralöle, so daß eine Ausbeuteerhöhung an Neutralöl eintritt (Anspruch 13).

Hierbei ist es besonders vorteilhaft, solche Fettsäuren zuzugeben, deren Abtrennung nachträglich sehr einfach ist. Dies hat z.B. für die Gewinnung von High-Oleic-Ölen Bedeutung, die zur Gewinnung von Ölsäureprodukten dienen sollen. Wird z.B. Laurinsäure oder Palmitinsäure als Zusatz verwendet, so können diese sehr einfach durch Destillation von entsprechenden Ölsäureprodukten abgetennt werden. Hingewiesen sei auch darauf, daß Fettsäuresalze als minderwertige Produkte in der üblichen Ölraffination anfallen und somit als kostengünstiger Zusatz für die Insitu-Entsäuerung und/oder zur Erhöhung der Ausbeute an Neutralöl verwendet werden können.

Eine Entsäuerung des Öls bei der erfindungsgemäßen Insitu-Entsäuerung kann auch noch bei Gehalten von freien Fettsäuren von über 10 Gew.-% durchgeführt werden. Nach dem Stand der Technik war eine Entsäuerung ohne größeren Aufwand bei einem Anteil von mehr als 10 Gew.-% nicht mehr möglich.

Vorzugsweise werden langkettige Fettsäuren mit Kettenlängen größer gleich 6 zugesetzt und diese im Gewinnungsprozeß mit Basen (säurebindenden Stoffen) vor der Durchführung des Zentrifugalprozesses neutralisiert.

Ferner wurde festgestellt, daß ein für die Zentrifugentrennung eingesetzter Alkohol unter Einsatz des Katalysators Alkoholat für eine Insitu-Umesterung der Neutralöle z.B. zu Methyl- oder Ethylfettsäurestern vor der Zentrifugentrennung genutzt werden kann. Dabei kommt dem Alkoholat auch eine doppelte Funktion zu, nämlich die des Katalysators und die der des säurebindenden Stoffs (Anspruch 15).

Nach dem Stand der Technik können Triglyceride dann mit entsprechenden Alkoholen basisch umgeestert werden, wenn praktisch kein Wasser und keine freien Fettsäuren anwesend sind. So werden z.B. Neutralöle (Triglyceride, Diglyceride und Monoglyceride), die einen Gehalt von freien Fettsäuren von unter 0,1% enthalten und praktisch wasserfrei sind, mit Alkoholaten in entsprechenden Alkoholen in sehr kurzer Zeit zu den entsprechenden Estern und Glycerin umgeestert. Das Glycerin scheidet sich dabei als weitestgehend esterunlösliche Verbindung als schwere flüssige Phase ab und entzieht sich damit der Reaktion. Bereits geringe Mengen an freien Fettsäuren stören die Reaktion durch Seifenbildung derart, daß kein Umsatz mehr erfolgt.

Üblicherweise werden Neutralöle zum Zwecke der Umesterung mit wasserfreien Alkoholen bei erhöhter Temperatur mit basischen Katalysatoren in Kontakt gebracht, und Ester sowie das Glycerin voneinander getrennt. Dies kann zum einen dadurch erfolgen, daß der Katalysator auf einen festen Träger aufgezogen ist und Öl sowie Alkohol an diesem Kontakt zur Reaktion gebracht werden. Am Ende der Reaktion treten Ester und Glycerin aus. Bei einem anderen Verfahren wird den Neutralöl-Alkohol-Gemischen Alkoholat zugesetzt und die Umesterung bei erhöhter Temperatur durchgeführt. Das Reaktionsgemisch wird anschließend auf Separatoren in Ester und Glycerin getrennt.

Überraschenderweise hat sich nun gezeigt, daß diese Umesterungsreaktion direkt an getrockneten, fein vermahlenen Ölsaaten durchgeführt werden kann. Das Verfahren kann selbst dann noch durchgeführt werden, wenn das Ausgangsprodukt einen Gehalt von freien Fettsäuren im Öl von mehr als 1% aufweist.

Die scharfgetrockneten Ölsaaten werden dazu fein vermahlen bzw. verrieben und mit Alkoholat enthaltendem Alkohol kurzfristig behandelt. Die Alkoholatmenge ist dabei so berechnet, daß sie höher liegt als die zur Neutralisation in der Ölsaat enthaltenen freien Fettsäuren notwendige Menge. Die Menge an Alkohol kann dabei in weiten Grenzen schwanken. In jedem Fall wird jedoch eine Menge benötigt, die ausreicht, das trockene Ausgangsmaterial innigst zu durchtränken. Besonders vorteilhaft eignet sich das Verfahren zur Herstellung von Methylestern und Ethylestern, wobei die Reaktionstemperatur im Bereich der Siedetemperatur der Alkohole liegt.

Zur Gewinnung der gebildeten Ester wird nach der Reaktion das Material soweit mit Wasser verdünnt, daß eine 15 bis 40%ige alkoholische Wasserphase im Reaktionsgemisch vorhanden ist. Die Höhe des Alkoholgehaltes wie auch die Menge an wäßriger Lösung wird von der Art der eingesetzten Ölsaat bestimmt. Stark quellende Ölsaatfrüchte benötigen dabei mehr Wasser-Alkohol-Gemisch als nicht quellende Ölsaatfrüchte. Die Höhe des Alkoholgehaltes läßt sich im Vorversuch dadurch bestimmen, daß geprüft wird, bei welcher Zusammensetzung eine maximale Esterausbeute als blanke Oberphase entsteht. Wie dargelegt, kann es notwendig sein, daß die eigentliche Umesterung mit sehr wenig Alkohol erfolt, daß jedoch anschließend das Reaktionsgemisch mit Alkohol und Wasser zur Abtrennung des Esters versetzt werden muß. In anderen Fällen wiederum kann es vorteilhaft sein, gleich während der Umesterung die notwendige Alkoholmenge zuzusetzen, so daß nach Durchführung der Reaktion lediglich Wasser zugeführt werden muß.

Somit ermöglicht das erfindungsgemäße Verfahren nicht nur eine sehr rationelle Gewinnung einer blanken Ölphase, sondern wiederum auch praktisch ohne zusätzlichen Trennschritt von freien Fettsäuren befreite Stoffe, wie Öle, sowie auch Umesterungsprodukte dieser Öle zu gewinnen.

Ferner kann eine Entsäuerung des Öls bei der erfindungsgemäßen Insitu-Entsäuerung auch noch bei Gehalten von freien Fettsäuren von über 10 Gew.-% durchgeführt werden. Nach dem Stand der Technik war eine Entsäuerung ohne größeren Aufwand bei einem Anteil von mehr als 10 Gew.-% nicht mehr möglich.

Da mit höheren Konzentrationen an flüchtigen organischen Lösemitteln gearbeitet wird, ist es vorteilhaft, wenn der Gewinnungsprozeß aus Sicherheitsgründen unter Inertgas abläuft. Vorteilhaft hierbei ist, daß kein Kontakt des gewonnenen Öls mit Luftsauerstoff stattfindet, also eine Oxidation von sauerstoffempfindlichen Ölen vermieden wird. Dies ist gerade für ungesättigte Fettsäuren enthaltende Öle und Wachse von Vorteil, insbesondere für Öle und Wachse mit mehrfach ungesättigten Fettsäuren, wie beispielsweise Fischöl, Leinöl und Tungöl.

Ein weiterer Vorteil des erfindungsgemäßen Gewinnungsverfahrens ist, daß keinerlei bakterielle Aktivität während des gesamten Gewinnungsprozesses entwickelt werden kann. Das Ausgangsmaterial wirkt durch den Zusatz von wasserlöslichem organischen Lösemittel wie z.B. Alkohol oder gegebenenfalls Ameisensäure bakterizid. Selbst durch das Ausgangsmaterial (Saatgut oder tierisches Material) eingeschleppte Zersetzungsbakterien werden in diesem Prozeß abgetötet bzw. inaktiviert.

Im folgenden wird das erfindungsgemäße Verfahren anhand von konkreten Beispielen erläutert.

### Beispiel 1:

55 g Sonnenblumenkerne werden fein vermahlen und mit der gleichen Menge Wasser 55 g) zu einem weitestgehend homogenen Brei verrührt. Die Gesamtmenge wird in zwei Anteile zu je 55 g Brei geteilt und in zwei verschließbare Zentrifugengläser mit 100 ml Inhalt gegeben.

Zu einem Anteil werden 12,5 g Wasser, zu dem anderen Anteil 12,5 g Ethanol zugegen. Die Zentrifugengläser werden dann verschlossen und in einem Wasserbad von 80°C eine Stunde gehalten. Von Zeit zu Zeit werden die Gläser dabei zur besseren Gleichgewichtseinstellung kurz geschüttelt.

Die noch heißen Zentrifugengläser werden dann in eine Laborzentrifuge gestellt und fünf Minuten zentrifugiert.

### Ergebnis:

In beiden Gläsern hat sich ein etwa gleich hoher Bodensatz von groben, fasrigen Feststoffen abgesetzt. Auf diesem Bodensatz befindet sich eine weitere Schicht von feinen Feststoffen. Über dieser Feststoffschicht steht die wässrige Phase.

Sie ist im Glas ohne Ethanol tiefbraun und enthält noch Schwebstoffe.

Im Glas mit Ethanolzusatz ist die Phase gelbbraun und klar.

Im Glas ohne Ethanolzusatz schwimmt auf der Wasserphase eine weißlich-graue, stark ausgeprägte Emulsionsschicht.

Im Glas mit Ethanolzuatz dagegen ist eine "blanke" Phasengrenze zu erkennen.

Die organische Ölphase im Glas ohne Ethanolzusatz ist mengenmäßig deutlich weniger als die im Glas mit Ethanolzusatz. Zudem ist sie trüb und wesentlich dunkler gefärbt.

Die Ölphase im Glas mit Ethanolzusatz ist wasserklar (blank) und nur leicht gelblich.

Aus den eingesetzten 55/2 g Sonnenblumenkerne wurden mit Zusatz von Ethanol, 11,5 ml Sonnenblumenöl gewonnen. Dies entspricht >37 Gew. % gewonnenes Öl bezogen auf die Einsatzmenge an Ölfrucht.

Durch nochmaliges Behandeln des abzentrifugierten Feststoffes mit einem Gemisch von 12,5 ml Ethanol und 27,5 g Wasser (eine Stunde bei 80°C und gelegentliches Umschütteln) konnte nach dem Zentrifugieren keine nennenswerte Ölmenge gewonnen werden.

Der von der Emulsionsschicht und der Ölphase befreite Bodensatz der Probe ohne Ethanolzusatz ergab beim Behandeln mit Ethanol/Wasser und anschließendem Zentrifugieren eine deutliche, einige ml ausmachende Ölschicht.

### Beispiel 2:

Die Durchführung erfolgt analog zu Beipiel 1, jedoch werden je Ansatz 25 g Sonnenblumenkerne, 25 ml Wasser und a) ohne Ethanolzusatz: weitere 25 ml Wasser und b) mit Ethanolzusatz: 25 g Ethanol zugesetzt.

### Ergebnis:

Bei der Versuchsdurchführung mit Ethanol werden 10,0 ml Sonnenblumenöl isoliert. Dies entspricht 36 Gew.% gewonnenes Öl bezogen auf die Einsatzmenge.

### Beispiel 3:

Die Durchführung erfolgt analog zu Beispiel 1, jedoch werden je Ansatz 25 g Euphorbia-latyris-Samen mit einem Ölgehalt von 43 % eingesetzt.

### Ergebnis:

Bei der Versuchsdurchführung mit Ethanol wurden 11,0 ml Euphorbia-Öl isoliert. Dies entspricht 39 Gew.% gewonnenes Öl bezogen auf die Ensatzmenge an Ölfrucht.

Bei der Versuchsdurchführung ohne Ethanolzusatz konnten nur 9 ml Öl isoliert werden.

### Beispiel 4:

Die Durchführung erfolgt analog zu Beispiel 1, jedoch wird Isopropanol als wasserlösliches Lösemittel zugesetzt.

### Ergebnis:

Es wird die gleiche Ausbeutung an Öl bezogen auf die eingesetzte Ölfruchtmenge erhalten wie im Beipsiel 1.

### Beispiel 5:

Die Durchführung erfolgt analog zu Beispiel 1, jedoch erfolgt die Zugabe des wasserlöslichen Lösemittels unterschiedlich:
a) Das Lösemittel wird vor der Wasserzugabe zugegeben,
b) Lösemittel und Wasser werden als Gemisch zugegeben.

a) Zwischen Lösemittelzugabe und Wasserzugabe wird die Mischung kurz auf 70°C erwärmt 5 min) Nach Zugabe der entsprechenden Wassermenge wird die Mischung wiederum nur kurz erwärmt (70°C, 5 min) und heiß zentrifugiert.
b) Nach der Zugabe des Wasser/Lösemittelgemisches wird der Brei 10 min auf 70°C erwärmt und anschließend zentrifugiert.

### Ergebnis:

In beiden Fällen entsteht eine klare Ölphase. Die Menge der Ölphase im Fall a) ist um ca. 5% gegenüber Fall b) erhöht.

### Beispiel 6:

50 g gemahlenes Produkt werden in einem ca. 200 ml fassenden, fest verschließbaren Gefäß mit 25 g Ethylalkohol verrührt. Das Gefäß wird fest verschlossen und für ca. 30 min. im Wasserbad auf 80°C erhitzt. Anschließend werden 50 g Wasser zugesetzt, das Gefäß wiederum verschlossen und für ca. 30 min. auf 80°C erhitzt. Schließlich wird die Mischung möglichst scharf zentrifugiert.

Entsprechend dieser Versuchsbeschreibung werden die in Tabelle 1 aufgeführten Produkte behandelt. Es werden fest verschraubbare 200 ml Zentrifugenbecher aus Polypropylen verwendet, welche anschließend direkt in einer Minifuge GL (Fa. Heraeus) 10 min. bei 5000 upm zentrifugiert werden. Die Wasserphase wird mittels Scheidetrichter abgetrennt.

Die folgende Tabelle gibt die Produkte an, die in Beispiel 6 eingesetzt werden können, und die Menge an Öl, die erhalten wird.

**Tabelle 1**

| Produkt | Öl(g) |
|---|---|
| Sonnenblumenkerne* | 12,7 |
| Leinsamen | 10,2 |
| Koriander geschrotet | 3,5 |
| Koriander* | 2,8 |
| Sojabohnen^{o} | 3,8 |
| Mandelkerne^{o} ungeschält | 15,7 |
| Erdnüsse^{o} (trockengeröstet) | 19,2 |
| Haselnüsse^{o}* | 22,0 |
| Sesam | 16,7 |
| Kürbiskerne mit Schale | 13,2 |
| Pfirsichkerne* | 2,0 |
| Mirabellenkerne* | 10,0 |
| Zwetschgenkerne | 12,8 |
| Paranüsse^{o}* | 24,0 |
| Wildkirschenkerne | 7,3 |
| Honigmelonenkerne | 1,6 |
| Blaumohn | 16,5 |
| Gelbsenf Zlata | 4,3 |
| Bienenweide(Phacelia-BALO) | 0,95 |
| Jojobanüsse | 17,3 |
| Euphorbia Lathyris* | 19,7 |
| italienischer Raps | 9,6 |
| Wallnuß | 24,0 |
| Traubenkerne | 0,9 |
| Kakaobohnen^{o} | 14,9 |
| Nachtkerze | 5,0 |
| Cashewnuß | 21,5 |
| Purgiernuß | 5,3 |
| Pekanuß | 22,0 |
| Raps | 9,0 |
| HO-Sonnenblumenkerne* | 20,0 |

| | |
|---|---|
| ^{o}Kerne ungeschält | |
| *Versuchsgut ungetrocknet | |

### Beispiel 7

Die Durchführung erfolgt analog zu Beispiel 6, jedoch wird die Probenmischung nicht erhitzt. Als Ausgangssubstanz werden Sonnenblumenkerne eingesetzt. Es werden 7g Öl erhalten.

### Beispiel 8

50 g Leinsamen werden fein vermahlen und mit 25 ml Hexan zu einem homogenen Brei verrührt. Die Mischung wird 15 min. bei Raumtemperatur (20-25°C) stehengelassen. Anschließend werden zu der Mischung 25 g Ethanol (techn.) und 50 g destilliertes H₂O zugegeben. Die Mischung wird gut homogenisiert und nochmals 15 min. bei Raumtemperatur (20-25°C) stehengelassen. Danach wird möglichst scharf zentrifugiert (5 min. bei 500 U/min.).

Es bilden sich drei Phasen aus: Eine feste Phase, eine wäßrige Phase und eine organische Phase (Hexan). Im Scheidetrichter wird die organische Phase von der wäßrigen Phase abgetrennt. Die organische Phase wird am Rotationsverdampfer abdestilliert. Bei dieser Versuchsdurchführung wurden 9,2 g Leinsamenöl isoliert. Dies entspricht 18,4 Gew.% gewonnenes Öl bezogen auf die Einsatzmenge.

Durch nochmaliges Behandeln des abzentrifugierten Feststoffes mit 25 ml Hexan konnte nach dem Zentrifugieren und Abdestillieren noch 1g Öl gewonnen werden.

### Beispiel 9

Es werden 143 g Hering, ein "nasses" Produkt, eingesetzt. Bei "nassen" Produkten wird ein Wasseranteil von 25 % bei der Berechnung zugrunde gelegt. Entsprechend wird die benötigte Menge Ethylalkohol berechnet, so daß ein Vernältnis Wasser/Ethanol von 1/0,5 entsteht. In einem Mixer wird eine homogene Masse erzeugt, welche 30 min. bei 30°C stehen gelassen wird. Anschließend wird möglichst scharf zentrifugiert und mittels Scheidetrichter die Wasserphase abgetrennt. Es werden 22,0 g Öl erhalten.

### Beispiel 10: Gewinnung von High-Oleic-Öl aus Euphorbia Lathyris

50 g Euphorbia Lathyris werden mit einer Mühle fein gemahlen, mit 25 g Ethanol oder Isopropanol versetzt und homogenisiert. Anschließend wird die Mischung bei 60 bis 70°C 30 Minuten kräftig gerührt. Es werden 50 g Wasser zugefügt und bei gleicher Temperatur weitere 30 Minuten gerührt. Danach wird das Gemisch bei 5000 U/min 10 Minuten zentrifugiert. Dabei findet eine Trennung statt: In der oberen Phase befindet sich das gewonnene Öl, während der Rückstand die untere feste Phase bildet. Das gewonnene Öl wird im Vakuum getrocknet.
Ausbeute: 19,5 g High-Oleic-Öl incl. Freier Fettsäuren; dies entspricht 39 % Öl, incl. freier Fettsäuren, bezogen auf die eingesetzte Saatgutmenge.

Das Öl hat einen FFA-Gehalt (Gehalt an freien Fettsäuren) von 9 Gew. %. Bezogen auf die eingesetzte Saatgutmenge wurden damit 35,5 Gew. % Neutralöl gewonnen.

Zur Bestimmung des Phosphatgehaltes wurde das Öl entsprechend einer Vorschrift in Form einer "colorimetischen Bestimmung" aufbereitet, wie sie z. B. in "Analyse der Fette und Fettprodukte", Kaufmann, S. 482, 483, (1958) beschrieben ist. Der Test auf Phosphat wurde mit Merck Aquamerck Phosphat durchgeführt.

### Beispiel 11: Insitu-Entsäuerung (Neutralölgewinnung)

Es wird wie in Beispiel 1 vorgegangen. Im Unterschied hierzu werden zu den 50 g Wasser noch 1,9 g Na₂CO₃ zugegeben und die Mischung wie in Beispiel 1 gerührt. Danach wird das Gemisch bei 5000 U/min 10 Minuten zentrifugiert. Die abgetrennte Ölphase wird im Vakuum getrocknet.
Ausbeute: 19,2 g High-Oleic-Öl, FFA-Gehalt: 0,2 Gew. %; dies entspricht 38 Gew. % Neutralöl bezogen auf die eingesetzte Saatgutmenge.

### Beispiel 11a:

Die Durchführung erfolgt analog Beispiel 11 mit Isopropanol. Es wurden jedoch statt 1,9 g Na₂CO₃ 3 g Na₂CO₃ zugegeben. Das durch Zentrifugieren gewonnene Öl weist einen FFA-Gehalt von ca. 0,05 % (Nachweisgrenze) auf.

Bei der Bestimmung des Phosphatgehaltes wurden die nach den Beispielen 10 und 11a gewonnenen Öle, entsprechend der genannten Verfahren mit MgO in Magnesiumphosphate überführt. Der Test auf Phosphat wurde mit dem Merck-Phosphattest (PMB), Art.Nr.: 1.1466.1 durchgeführt.
Das nach Beispiel 10 gewonnene Öl weist einen 100fach höheren Phosphatgehalt auf als das nach Beispiel 11a gewonnene Öl.

### Beispiel 12: Insitu-Umesterung

Wie in Beispiel 10 werden 100 g Euphorbia Lathyris (Restfeuchte 1 Gew. %) fein gemahlen und mit 50 g Methanol versetzt. Die Mischung wird unter Rühren auf 60 bis 70°C erwärmt. Parallel dazu wird eine Alkoholatlösung aus 50 g Methanol und 3 g NaOH hergestellt. Die Alkoholatlösung wird tropfenweise zur obigen Mischung zugesetzt. Nach Ende der Zugabe wird 5 Minuten gerührt. Die Mischung wird in 200 ml heißes Wasser eingerührt und zentrifugiert (5000 U/min, 10 Minuten). Der abgetrennte Methylester wird bei 70°C im Vakuum (20 mbar) getrocknet.
Roh.-Ausbeute: 16,5 g Fettsäuremethylester
Destilliert: 15,9 g Fettsäuremethylester.

### Beispiel 13: Neutralölgewinnung aus Euphorbia Lathyris

In einem heizbaren Rührkessel werden unter Stickstoffspülung 130 l Isopropanol vorgelegt.

Auf einer Mühle mit Korundscheibe der Firma Fryma werden 200 kg Saat der Euphorbia Lathyris (mit einem Ölgehalt von ca. 45 % Gew. Öl und einem FFA-Gehalt von 6 % Gew. im Öl) gemahlen, über eine Gasschleuse zudosiert und ständig verrührt.

Die Masse wird auf 64 bis 67°C erhitzt und eine Stunde malaxiert (langsam gerührt).

Danach werden 80 l Wasser (65°C), 20 l Sodalösung (8kg Na₂CO₃ in 20 l wäßriger Lösung) mit 120 l Wasser (65°C) zudosiert und 1,5 Std. weiter malaxiert.

Mittels einer Dickstoffpumpe wird die Masse zu einem 2-Phasen-Dekanter der Fa. Westfalia Separator AG, gepumpt (500 bis 900 l/h), über den blankes Öl von den festen und flüssigen Reststoffen abgetrennt wird. Das rohe Öl enthält noch geringe Mengen an gelöstem Wasser und Isopropanol (ca. 8%).

### Ausbeute:

Rohöl: 85 l entspricht 76,5 kg (mit Wasser und Isopropanol ohne Berücksichtigung der Ölrestmenge im Dekanter und Leitungssystem).

Öl: 78,2 l entspricht 70,4 kg (nach Abzug des gelösten Wassers und Alkoholes ohne Berücksichtigung der Ölrestmenge im Dekanter und Leitungssystem).
Dies entspricht einer isolierten Ölmenge von 35,2 % bezogen auf die eingesetzte Saatmenge.

Die Säurezahl wird durch Neutralisation mit KOH bestimmt, wobei eine Säurezahl von 1 der Neutralisation von 1 g Öl durch 1 mg KOH entspricht. Aus der Säurezahl wird über die durchschnittliche Molmasse der im Öl enthaltenen Fettsäuren der Anteil der freien Fettsäuren berechnet.
Säurezahl: 0,9
FFA: 0,4 %
Restöl der Trockensubstanz 4 bis 6 Gew. % (TS).

(Dieser Wert entspricht nicht der Gleichgewichtsphase, sondern der Gehalt an Restöl in der Trockensubstanz ist durch die Anlaufphase erhöht).

### Beispiel 14: Neutralölgewinnung aus Euphorbia Lathyris

In einem heizbaren Rührkessel werden unter Stickstoffspülung 180 l Isopropanol vorgelegt.

337 kg Euphorbia Lathyris (mit einem durchschnittlichen FFA-Gehalt von 12,5 Gew. %, werden gemahlen und unter dem Zusatz von 6,9 kg Na₂CO₃ über eine Gasschleuse zudosiert und mit dem Isopropanol verrührt.

Die Masse wird auf 64°C erhitzt und ca. eine Stunde malaxiert.

Danach werden 140 l Wasser (70°C), 40 l Natronlauge (1 kg NaOH in 40 l Lösung) mit 100 l Wasser (70°C) zudosiert und eine Stunde weiter malaxiert.

Mittels einer Dickstoffpumpe wird die Mase zu einem 2-Phasen-Dekanter der Firma Westfalia Separator AG, gepumpt (500 bis 900 l/h), über den blankes Öl von den festen und flüssigen Reststoffen abgetrennt wird. Das rohe Öl enthält noch geringe Mengen an gelöstem Wasser und Isopropanol (ca. 8 %).

### Ausbeute:

Rohöl: 150 l entspricht 135 kg (mit Wasser und Isopropanol, ohne Berücksichtigung der Ölrestmenge im Dekanter und Leitungssystem).

Öl: 138 l entspricht 124,8 kg (nach Abzug des gelösten Wassers und Alkoholes ohne Berücksichtigung der Ölrestmenge im Dekanter und Leitungssystem).

Dies entspricht einer isolierten Ölmenge von 37 Gew. % bezogen auf die eingesetzte Saatmenge.
Säurezahl: 2,5 wie oben bestimmt
FFA: 1,2 Gew. %

Restöl in Trockensubstanz 4,9 Gew. % (TS). (Durch Ölverluste in der Anlaufphase leicht erhöht).

### Beispiel 15: Neutralölgewinnung aus Euphorbia Lathyris

In einem heizbaren Rührkessel werden unter Stickstoffspülung 14 l Sodalösung (4kg Na₂CO₃ in wäßriger 14 l Lösung) und 130 l Isopropanol zudosiert.

Auf einer Mühle mit Korundscheibe der Firma Fryma werden 200 kg Saat der Euphorbia Lathyris (mit einem FFA-Gehalt von 6 Gew. % im Öl) gemahlen, über eine Gasschleuse zudosiert und ständig verrührt.

Die Masse wird auf 60°C erhitzt und eine Stunde malaxiert.

Mittels einer Dickstoffpume wird die Masse zu einem 2-Phasen-Dekanter der Firma Westfalia Separator AG gepumpt.

Unmittelbar vor dem Dekanter wird der Masse die benötigte Menge von 170 l Wasser in der Stunde zudosiert. Im Dekanter wird blankes Öl von festen und flüssigen Reststoffen abgetrennt.

### Ausbeute:

Rohöl: 55 l entspricht 49,5 kg (mit Wasser und Isopropanol ohne Berücksichtigung der Ölrestmenge im Dekanter und Leitungssystem).

Öl: 50,6 l entspricht 44,5 kg (nach Abzug des gelösten Wassers und Alkohols ohne Berücksichtigung der Ölrestmenge im Dekanter und Leitungsystem).
Säurezahl: 1
FFA: 0,6 Gew. %

Restöl in gesamter Trocksubstanz 14,6 Gew. % (stark erhöht durch Anlaufphase).

## Patentansprüche

1. Verfahren zur Gewinnung von nativen, organischen Stoffen, in Form von Ölen, Fetten und Wachsen und deren Derivaten aus nativen Stoffgemengen, bei dem das Ausgangsprodukt fein zerkleinert wird und unter Zugabe von mindestens einem wasserlöslichen organischen Lösemittel und gegebenenfalls Wasser zu einem wäßrigen Brei verarbeitet wird, aus dem durch Zentrifugieren eine flüssige, organische Phase mit den zu gewinnenden Stoffen erhalten wird,
dadurch gekennzeichnet,
daß das mindestens eine wasserlösliche, wasserfreie organische Lösemittel bezogen auf den Gesamtflüssiganteil mit einem solchen Anteil zwischen 5 Gew.% und 75 Gew.% zugesetzt wird, daß der wäßrige Brei im Zentrifugalfeld in einem Schritt in eine wäßrige, feste Bestandteile und das oder die Lösemittel zum überwiegenden Teil enthaltende Phase höherer Dichte und eine hiervon durch eine scharfe Phasengrenze getrennte emulsionsfreie flüssige, organische Phase vergleichsweise geringerer Dichte mit den zu gewinnenden Stoffen getrennt wird.

2. Verfahren nach Anspruch 1,
**dadurch gekennzeichnet,**
daß die Stoffgemenge Ölfrüchte, pflanzliche und tierische Gewebe, insbesondere:
Sonnenblumenkerne, Rapssaat, Leinsaat, Rizinussamen, Soja-Bohnen, Koreandersamen und Kalendulasamen, wachshaltige Pflanzenteile wie Jojoba-Bohnen, Cacao- und Kaffee-Bohnen, und Fische wie Rotbarsch und Hering sind.

3. Verfahren nach Anspruch 1 oder 2,
**dadurch gekennzeichnet,**
daß im Falle des Einsatzes von Öltrockenfrüchten als die nativen organischen Stoffe diese zunächst nur mit dem wasserlöslichen organischen Lösemittel, das wasserfrei ist, zu einer knetfähigen Masse oder einem rührfähigen Brei verarbeit werden und anschließend durch Vermischung mit Wasser der wäßrige Brei hergestellt wird.

4. Verfahren nach Anspruch 1 oder 2,
**dadurch gekennzeichnet,**
daß insbesondere im Fall von wasserhaltigen nativen organischen Stoffen, wie Fisch und Geflügel, der wäßrige Brei hergestellt wird, indem das wasserlösliche organische Lösemittel einer wasserhaltigen Masse des zerkleinerten Ausgangsproduktes zugegeben wird.

5. Verfahren nach Anspruch 1, 2 oder 3,
**dadurch gekennzeichnet,**
daß für die Verarbeitung des wäßrigen Breis oder der knetfähigen bzw. rührfähigen Masse aus Öltrockenfrüchten und organischen Lösemitteln geknetet bzw. gerührt wird.

6. Verfahren nach einem der vorhergehenden Ansprüche,
**dadurch gekennzeichnet,**
daß der Brei, bevor er in das Zentrifugalfeld gebracht wird, für einige Zeit zur Einstellung eines Verteilungsgleichgewichtes bei erhöhter Temperatur gehalten wird.

7. Verfahren nach einem der vorhergehenden Ansprüche,
**dadurch gekennzeichnet,**
daß die zugesetzten, wasserlöslichen Lösemittel Alkohole, insbesondere Methanol, Ethanol, Propanole und Butanole sowie Gemische aus diesen, sind.

8. Verfahren nach einem der vorhergehenden Ansprüche,
**dadurch gekennzeichnet,**
daß der Anteil des wasserlöslichen organischen Lösemittels im Gesamtflüssiganteil 15 Gew.% bis 50 Gew.% beträgt.

9. Verfahren nach einem der vorhergehenden Ansprüche,
**dadurch gekennzeichnet,**
daß im Fall von Öltrockenfrüchten Öltrockenfrüchte zur flüssigen Phase im Gewichtsverhältnis 1 : 1 bis 1 : 10, vorzugsweise bis 1 : 5 eingesetzt werden, und daß das Gewichtsverhältnis Lösemittel zu Wasser 1 : 1 bis 1 : 5 beträgt.

10. Verfahren nach einem der vorhergehenden Ansprüche
**dadurch gekennzeichnet,**
daß vor dem Zentrifugieren säurebindende Stoffe zur Bindung von freien Fettsäuren zugesetzt werden, wobei der Zusatz in flüssiger oder fester Form zu dem zerkleinerten Ausgangsprodukt mit oder ohne Lösemittel zur benötigen Wassermenge, zum wäßrigen Brei, zum Lösemittel oder bereits während des Zerkleinerns erfolgt.

11. Verfahren nach Anspruch 10,
**dadurch gekennzeichnet,**
daß als die säurebindenden Stoffe Calciumoxid, Magnesiumoxid, Natriumhydroxid, Kaliumhydroxid, Kaliumcarbonat, Natriumcarbonat und Natrium- und Kaliumsalze schwacher Säuren, insbesondere nativer Fettsäuren eingesetzt werden.

12. Verfahren nach Anspruch 10 oder 11,
**dadurch gekennzeichnet,**
daß mehr an den säurebindenden Stoffen zugesetzt wird als die aus der Säurezahl bestimmte, für die Neutralisation erforderliche Menge.

13. Verfahren nach einem der Ansprüche 10 bis 12,
**dadurch gekennzeichnet,**
daß bei einem Ausgangsprodukt mit einem niedrigeren Gehalt an freien Fettsäuren als dem zu erwartenden Ölverlust in den durch das Zentrifugieren abgetrennten Nichtölbestandteilen vor dem Zentrifugieren freie Fettsäuren bzw. deren Salze zugesetzt werden.

14. Verfahren nach Anspruch 13,
**dadurch gekennzeichnet,**
daß langkettige Fettsäuren mit einer Kettenlänge größer gleich 6 oder deren Kalium- oder Natriumsalze zugesetzt werden.

15. Verfahren nach einem der vorhergehenden Ansprüche 3 bis 10 und 12 unter Rückbezug auf Anspruch 3,
**dadurch gekennzeichnet,**
daß den Öltrockfürchten als das organische Lösemittel ein Alkoholat enthaltender Alkohol zugesetzt wird, wobei das Alkoholat als der säurebindende Stoff und als Katalysator für eine Umesterungsreaktion der vorhandenen Neutralöle mit dem Alkohol dient, der wiederum gleichzeitig als das wasserlösliche Lösemittel dient, und daß die Mengen an Alkoholat und Alkohol für die zusätzliche Katalysatorwirkung bzw. Umesterungsreaktion gegenüber den Mengen als säurebindender Stoff bzw. wasserlösliches Lösemittel erhöht sind.

16. Verfahren nach einem der vorhergehenden Ansprüche 1 bis 15,
**dadurch gekennzeichnet,**
daß wasserunlösliche, leichte Lösungsmittel und/oder wasserlösliche Elektrolyte zugesetzt werden.

## Claims

1. A process for obtaining native, organic substances in the form of oils, fats and waxes and their derivatives from native substance mixtures, in which the starting product is finely comminuted and is worked into an aqueous suspension with addition of at least one water-soluble organic solvent and optionally of water, from which suspension a liquid, organic phase with said substances to be obtained is extracted by means of centrifugal action,
characterized in that said at least one water-soluble, water-free organic solvent is added in such a proportion between 5 % and 75% by weight of the total liquid fraction that said aqueous suspension is separated in one step in the centrifugal field into an aqueous phase of higher density, which contains solid components and the solvent or solvents to the major part, and into a liquid, emulsion-free organic phase of comparatively lower density with the substances to be obtained being separated from said aqueous phase by a sharp phase boundary.

2. A process according to claim 1, characterized in that the substance mixtures are oleaginous fruits, vegetable and animal tissues, especially:
sunflower seeds, rape seeds, linseeds, castor oil seeds, soya beans, coriander seeds and calendula seeds, plants containing waxes such as jojoba beans, cocoa and coffee beans and fish such as rose fish and herring.

3. A process according to claim 1 or 2, characterized in that when using dried oleaginous fruits as the native organic substance these are firstly worked solely with the water-soluble organic solvent, which is water-free, into a kneadable mass or a stirrable suspension and the aqueous suspension is then produced by mixing with water.

4. A process according to claim 1 or 2, characterized in that especially in the case of native organic substances containing water, such as fish and fowl, the aqueous suspension is produced, in that the water-soluble organic solvent is added to a mass of the comminuted starting product containing water.

5. A process according to claim 1, 2 or 3, characterized in that for processing the aqueous suspension or the mass being kneadable or stirrable of dried oleaginous fruits and organic solvent is kneaded or stirred.

6. A process according to any of the preceding claims, characterized in that, before the suspension is placed in the centrifugal field, it is held at an enhanced temperature for some time to establish an equilibrium distribution.

7. A process according to any of the preceding claims, characterized in that the added water-soluble solvents are alcohols, especially methanol, ethanol, propanols and butanols as well as mixtures thereof.

8. A process according to any of the preceding claims, characterized in that the proportion of the water-soluble solvent in the total liquid fraction amounts to 15% by weight to 50% by weight.

9. A process according to any of the preceding claims, characterized in that in the case of dried oleaginous fruits, dried oleaginous fruits are present in the ratio by weight to the liquid phase of 1:1 to 1:10, preferably to 1:5, and in that the ratio by weight of solvent to water amounts to 1:1 to 1:5.

10. A process according to any of the preceding claims, characterized in that acid-binding substances for binding free fatty acids are added before the centrifuging, where the addition is effected in liquid or solid form to the comminuted starting product with or without solvent to the required amount of water, to the aqueous suspension, to the solvent or already during the comminution.

11. A process according to claim 10, characterized in that calcium oxide, magnesium oxide, sodium hydroxide, potassium hydroxide, potassium carbonate, sodium carbonate and sodium and potassium salts of weak acids, especially native fatty acids are used as the acid-binding substances.

12. A process according to claim 10 or 11, characterized in that more of the acid-binding substance is added than the amount determined from the acid number as necessary for the neutralization.

13. A process according to any of claims 10 to 12, characterized in that, with a starting product with a lower content of free fatty acids than the expected oil loss in the non-oil components separated by the centrifuging, free fatty acids or their salts are added before the centrifuging.

14. A process according to claim 13, characterized in that long chain fatty acids with a chain length greater than or equal to 6 or their potassium or sodium salts are added.

15. A process according to any of the preceding claims 3 to 10 and 12 as dependent on claim 3, characterized in that an alcohol containing alcoholate is added to the dried oleaginous fruits as the organic solvent, wherein the alcoholate serves as the acid-binding substance and as a catalyst for transesterification of the neutral oil present with the alcohol, which in turn serves at the same time as the water-soluble solvent, and in that the amounts of alcoholate and alcohol are increased relative to the amounts as acid-binding substance and water soluble solvent for the additional catalyzing action and transesterification respectively.

16. A process according to any of the preceding claims 1 to 15, characterized in that light solvents which are not water-soluble and/or water-soluble electrolytes are added.

## Revendications

1. Procédé pour extraction de substances natives organiques sous forme d'huiles, de matières grasses et de cires et leurs dérivés à base de mélanges de substances natives, au cours duquel le produit de départ est broyé finement et transformé par addition d'au moins un solvant organique hydrosoluble et éventuellement d'eau en l'état de pâte, à partir de laquelle on obtient par centrifugation, une phase liquide organique avec les substances à extraire,
caractérisé en ce que,
ledit au moins un solvant organique anhydre hydrosoluble, est ajouté avec une proportion comprise entre 5 % et 75 % en poids par rapport à la part liquide entière, telle que dans le champ centrifuge la pâte aqueuse est séparée, en une seule étape, en une composante solide aqueuse et une phase de densité plus élevée contenant pour une part essentielle le ou les solvants, et une phase organique liquide, étant séparée de celles-ci par une frontière de phase précise, exempte d'émulsion d'une densité comparativement plus faible avec les substances à extraire.

2. Procédé selon la revendication 1, caractérisé en ce que les mélanges de substances sont des fruits oléifères, des tissus végétaux et animaux, en particulier : les graines de tournesol, les graines de colza, les graines de lin, les graines de ricin, les graines de soja, les graines de coriandre et des graines de calendule, les parties végétales contenant de la cire telles que les graines de jojoba, les fèves de cacao et les grains de café, et les poissons tels que le sébaste et le hareng.

3. Procédé selon la revendication 1 ou 2, caractérisé en ce que, dans le cas où l'on met en oeuvre des fruits secs oléifères comme substances organiques natives, ceux-ci sont d'abord transformés seulement avec le solvant organique hydrosoluble, qui est anhydre, en une masse pouvant être malaxée ou une pâte pouvant être agitée et ensuite la pâte aqueuse est produite en la mélangeant avec de l'eau.

4. Procédé selon la revendication 1 ou 2, caractérisé en ce que, en particulier dans le cas de substances organiques natives hydratées, telle que le poisson et la volaille, la pâte aqueuse est produite en ajoutant le solvant organique hydrosoluble à une masse hydratée du produit de départ broyé

5. Procédé selon la revendication 1, 2 ou 3, caractérisé en ce que, pour la transformation de la pâte aqueuse ou de la masse pouvant être malaxée ou agitée à base de fruits secs oléifères et de solvants organiques, on procède à un malaxage ou une agitation.

6. Procédé selon l'une quelconque des revendications précédentes, caractérisé en ce que la pâte est maintenue pendant quelque temps à une température plus élevée pour réaliser une homogénéisation, avant de la placer dans le champ centrifuge.

7. Procédé selon l'une quelconque des revendications précédentes, caractérisé en ce que les solvants hydrosolubles ajoutés sont des alcools en particulier, le méthanol, l'éthanol, les propanols et les butanols ainsi que les mélanges de ceux-ci.

8. Procédé selon l'une quelconque des revendications précédentes, caractérisé en ce que la part du solvant organique hydrosoluble dans la part liquide entière est comprise entre 15 % et 50 % en poids.

9. Procédé selon l'une quelconque des revendications précédentes, caractérisé en ce que dans le cas de fruits secs oléifères, les fruits secs oléifères sont ajoutés à la phase liquide dans un rapport pondéral compris entre 1:1 et 1:10, de préférence entre 1:1 et 1:5, et en ce que le rapport pondéral du solvant à l'eau est compris entre 1:1 et 1:5.

10. Procédé selon l'une quelconque des revendications précédentes, caractérisé en ce que, avant la centrifugation des substances neutralisant les acides sont ajoutées pour neutraliser des acides gras libres, l'ajout s'effectuant sous forme liquide ou solide au produit de départ broyé, avec ou sans solvant à la quantité d'eau nécessaire, à la pâte aqueuse, au solvant ou déjà au cours du broyage.

11. Procédé selon la revendication 10, caractérisé en ce que l'oxyde de calcium, l'oxyde de magnésium, l'hydroxyde de sodium, l'hydroxyde de potassium, le carbonate de potassium, le carbonate de sodium et les sels de sodium et de potassium d'acides faibles, en particulier d'acides gras natifs sont mis en oeuvre en tant que substances neutralisant les acides.

12. Procédé selon la revendication 10 ou 11, caractérisé en ce que les substances neutralisant les acides sont mises en oeuvre à raison d'une quantité supérieure à celle nécessaire à la neutralisation, déterminée d'après l'indice d'acidité.

13. Procédé selon l'une des revendications 10 à 12, caractérisé en ce que, pour un produit de départ ayant une teneur en acides gras libres inférieure à la perte d'huile prévue dans les composants non oléifères séparés par centrifugation, on ajoute des acides gras libres ou leurs sels.

14. Procédé selon la revendication 13, caractérisé en ce que l'on ajoute des acides gras à chaîne longue, ayant une longueur de chaîne plus grande ou égale à 6, ou leurs sels de potassium ou de sodium.

15. Procédé selon l'une quelconque des revendications 3 à 10 et 12 précédentes, en référence à la revendication 3, caractérisé en ce qu'on ajoute un alcool contenant un alcoolate en tant que solvant organique aux fruits secs oléifères, dans lequel l'alcoolate sert de substance neutralisant les acides et de catalyseur pour une réaction de transestérification des huiles neutres présentes avec l'alcool qui d'autre part sert en même temps de solvant hydrosoluble, et en ce que les quantités d'alcoolate et d'alcool pour l'effet catalytique supplémentaire ou la transestérification sont augmentées au-delà des quantités prévues en tant que substance neutralisant les acides ou solvant hydrosoluble.

16. Procédé selon l'une quelconque des revendications 1 à 15, caractérisé en ce que l'on ajoute des solvants légers insolubles dans l'eau et/ou des électrolytes solubles dans l'eau.
